# EUROPEAN PATENT APPLICATION

(11) **EP 4 752 022 A1**
(43) Date of publication of application: **03.06.2026**
(21) Application number: 25216616.0
(22) Date of filing: 18.11.2025
(51) Int. Cl.: B60W 50/02, B60W 50/029, B60W 60/00

(54) **METHOD, APPARATUS, DEVICE AND STORAGE MEDIUM FOR PROCESSING VEHICLE ABNORMALITY**

(30) Priority: 29.11.2024 CN 202411747434
(71) Applicant: Beijing Voyager Technology Co., Ltd., 100094 Beijing (CN)
(72) Inventor: GUO, Fengrui, Beijing, 100094 (CN); ZHANG, Huanming, Beijing, 100094 (CN); ZHANG, Yanbo, Beijing, 100094 (CN)
(74) Representative: Marks & Clerk LLP

(57) **Abstract**

The embodiments of disclosure relate to methods, apparatuses, devices and storage media for processing vehicle abnormality. The proposed method includes: receiving a message associated with a planning system of an autonomous vehicle, the message indicating an abnormality in the planning system; in response to determining that lateral offset information between a planned trajectory and a traveling trajectory of the autonomous vehicle within a predetermined duration satisfies a predetermined condition, determining that the planning system of the autonomous vehicle is associated with a first abnormality type, the lateral offset information indicating an offset direction of the traveling trajectory relative to the planned trajectory; and performing a first set of actions corresponding to the first abnormality type, the first set of actions at least comprising reducing a traveling speed of the autonomous vehicle.

## Description

### FIELD

Example embodiments of the present disclosure generally relate to the field of computers, and in particular, to method, apparatus, device, and computer-readable storage medium for processing vehicle abnormality.

### BACKGROUND

Autonomous driving is a technique for planning a movement trajectory of a vehicle and controlling the vehicle to reach a specified destination by using a computer to replace or to assist a human driver. With advances in autonomous driving technology, some vehicles based on autonomous driving capabilities (also referred to as autonomous vehicles) are able to provide travel services for users.

### SUMMARY

In a first aspect of the present disclosure, a method for processing vehicle abnormality is provided. The method comprises: receiving a message associated with a planning system of an autonomous vehicle, the message indicating an abnormality in the planning system; in response to determining that lateral offset information between a planned trajectory and a traveling trajectory of the autonomous vehicle within a predetermined duration satisfies a predetermined condition, determining that the planning system of the autonomous vehicle is associated with a first abnormality type, the lateral offset information indicating an offset direction of the traveling trajectory relative to the planned trajectory; and performing a first set of actions corresponding to the first abnormality type, the first set of actions at least comprising reducing a traveling speed of the autonomous vehicle.

In a second aspect of the present disclosure, an apparatus for processing vehicle abnormality is provided. The apparatus comprises: a message receiving module configured to receive a message associated with a planning system of an autonomous vehicle, the message indicating an abnormality in the planning system; a type determining module configured to, in response to determining that lateral offset information between a planned trajectory and a traveling trajectory of the autonomous vehicle within a predetermined duration satisfies a predetermined condition, determine that the planning system of the autonomous vehicle is associated with a first abnormality type, the lateral offset information indicating an offset direction of the traveling trajectory relative to the planned trajectory; and an action executing module configured to perform a first set of actions corresponding to the first abnormality type, the first set of actions at least comprising reducing a traveling speed of the autonomous vehicle.

In a third aspect of the present disclosure, an electronic device is provided. The electronic device comprises at least one processing unit and at least one memory coupled to the at least one processing unit and storing instructions for execution by the at least one processing unit. The instructions, when executed by the at least one processing unit, causes the electronic device to perform the method of the first aspect.

In a fourth aspect of the present disclosure, a computer-readable storage medium is provided. The computer-readable storage medium stores a computer program, and the computer program is executable by the processor to implement the method of the first aspect.

In a fifth aspect of the present disclosure, a computer program product is provided. The computer program product includes computer-executable instructions that, when executed by a processor, implement the method according to the first aspect of the present disclosure.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIG. 2 illustrates a flowchart of an example process for processing vehicle abnormality according to some embodiments of the present disclosure;
FIG. 3 illustrates a schematic diagram of an example process for processing vehicle abnormality according to some embodiments of the present disclosure;
FIG. 4 illustrates an example schematic structural block diagram of a process for processing vehicle abnormality according to some embodiments of the present disclosure; and
FIG. 5 illustrates a block diagram of an electronic device capable of implementing various embodiments of the present disclosure.

### DETAILED DESCRIPTION

The embodiments of the present disclosure will be described in more detail below with reference to the drawings. Although some embodiments of the present disclosure are shown in the drawings, it would be appreciated that the present disclosure could be implemented in various forms and should not be construed as limited to the embodiments set forth herein. On the contrary, these embodiments are provided for a more thorough and complete understanding of the present disclosure. It would be appreciated that the drawings and embodiments of the present disclosure are only used for illustrative purposes and are not used to limit the protection scope of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different section/subsection in any manner.

In the description of the embodiments of the present disclosure, the term "include/comprise" and similar terms thereof should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition and/or use, etc. These aspects all comply with corresponding laws, regulations and related provisions. In the embodiments of the present disclosure, all data collection, acquisition, processing, machining, forwarding, use, etc. are carried out on the premise that the user knows and confirms. Accordingly, when implementing the embodiments of the present disclosure, the user should be informed of the types, range of use, use scenarios, etc. of possible data or information involved and obtain the authorization of the user in an appropriate manner in accordance with relevant laws and regulations. The specific manner of informing and/or authorizing may vary according to the actual situation and application scenarios, and the scope of the present disclosure is not limited in this regard.

If the solutions in this specification and embodiments involve personal information processing, the processing will be carried out on the premise that there is a legal basis (for example, the consent of the personal information subject is obtained, or it is necessary to perform a contract, etc.), and will only be carried out within the scope of provisions or agreements. If the user refuses to process personal information other than the necessary information required for the basic functions, it will not affect the user's use of the basic functions.

According to a conventional scheme, in some scenarios, the autonomous vehicle may experience planning and control abnormalities (PNC abnormalities), resulting in their inability to continue driving or a risk of collision, thereby affecting normal service of the autonomous vehicle.

The embodiment of the disclosure provides a solution for processing vehicle abnormality. According to the solution, a message associated with a planning system of an autonomous vehicle may be received, and the message indicates an abnormality in the planning system. In response to determining that lateral offset information between a planned trajectory and a traveling trajectory of the autonomous vehicle within a predetermined duration satisfies a predetermined condition, it is determined that the planning system of the autonomous vehicle is associated with a first abnormality type, wherein the lateral offset information indicates an offset direction of the traveling trajectory relative to the planned trajectory. Then, a first set of actions corresponding to the first abnormality type is performed, wherein the first set of actions at least includes reducing a traveling speed of the autonomous vehicle.

In this way, the embodiments of the present disclosure can determine the abnormality type of the autonomous vehicle, and can perform the corresponding processing action based on the abnormality type, thereby improving the processing timeliness and the reliability of service for the autonomous vehicle when dealing with the abnormality.

Various example implementations of this solution are described in detail below in conjunction with the accompanying drawings.

### EXAMPLE ENVIRONMENT

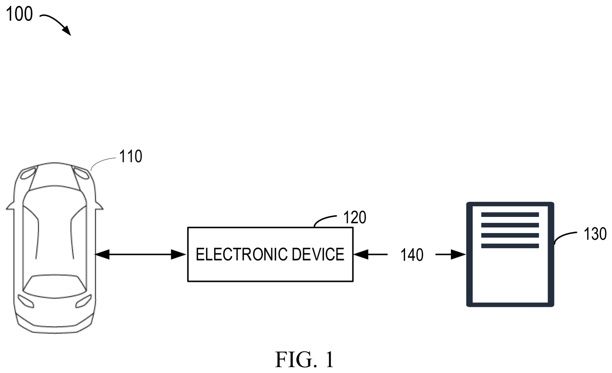

FIG. 1 illustrates a schematic diagram of an example environment 100 in which embodiments of the present disclosure can be implemented. As shown, the environment 100 may include a vehicle 110. The vehicle 110 may be an autonomous vehicle, that is, a vehicle having autonomous driving capability (or unmanned ability), also referred to as an unmanned vehicle, a self-driving vehicle, or the like.

In some scenarios, the vehicle 110 may be allocated to provide travel services for the user. For example, a user may obtain a travel service provided by the vehicle 110 through a travel application. In some scenarios, the vehicle 110 may also be referred to as an unmanned taxi, or robotaxi. In a process in which the vehicle 110 provides travel services for the user, the vehicle 110 may be equipped with a security officer. The security officer may take over the vehicle 110, for example, in bursts. Alternatively, the vehicle 110 may also be in an unmanned controlled state.

As shown in FIG. 1, the vehicle 110 may also be associated with the electronic device 120. The electronic device 120 may be integrated inside the vehicle 110, or may be connected to the vehicle 110 through a network. As an example, the electronic device 120 may be deployed with an abnormality processing module of the vehicle 110 for controlling the vehicle 110 to perform corresponding actions based on different types of abnormalities.

As shown in FIG. 1, the electronic device 120 may further establish a communication connection 140 with the planning system 130. As an example, the communication connection 140 may be established in a wired manner or a wireless manner. The communication connection 140 may include, but is not limited to, a Bluetooth connection, a mobile network connection, a universal serial bus connection, a wireless fidelity connection, and the like, and the embodiments of the present disclosure are not limited in this regard. In an embodiment of the present disclosure, the electronic device 120 and the planning system 130 may implement signaling interaction through the communication connection 140 therebetween.

In some embodiments, the planning system 130 may obtain a travel request of the user and plan a trajectory of the vehicle 110. In addition, the planning system 130 may further send a message to the electronic device 120 to indicate that the planning system has an abnormality, and request a corresponding abnormality processing action.

It should be understood that the structure and function of the environment 100 is described for illustrative purposes only, and does not imply any limitation to the scope of the present disclosure.

### EXAMPLE PROCESSES

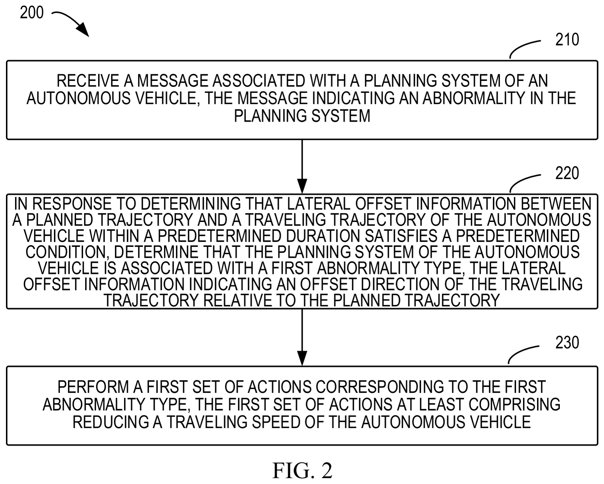

FIG. 2 shows a flowchart of an example process for processing vehicle abnormality according to some embodiments of the present disclosure. The process 200 may be implemented at electronic device 120. The process 200 is described below with reference to FIG. 1.

In some embodiments, the electronic device 120 may plan a global route corresponding to the target travel based on a planning system of the autonomous vehicle. Such a planning system may, for example, be used to plan aspects such as route, navigation, obstacle avoidance, environmental perception, real-time response, and vehicle control of the autonomous vehicle, so that the autonomous vehicle can travel safely according to the planned route.

Further, in order to cope with complex and changeable traffic conditions, the electronic device 120 may further utilize a planning system to perform local planning, so as to make real-time adjustment according to traffic conditions, thereby realizing obstacle avoidance of the autonomous vehicle. As an example, the electronic device 120 may use the planning system to plan a next route based on a predetermined distance. In this way, through the cooperation, it can be ensured that the autonomous vehicle can efficiently and safely reach the destination from the starting point of the target journey. The following describes a process for processing planned abnormalities of the vehicle when the planning system of the autonomous vehicle carries out local planning.

As shown in FIG. 2, at block 210, the electronic device 120 receives a message associated with the planning system of the autonomous vehicle, wherein the message indicates an abnormality in the planning system.

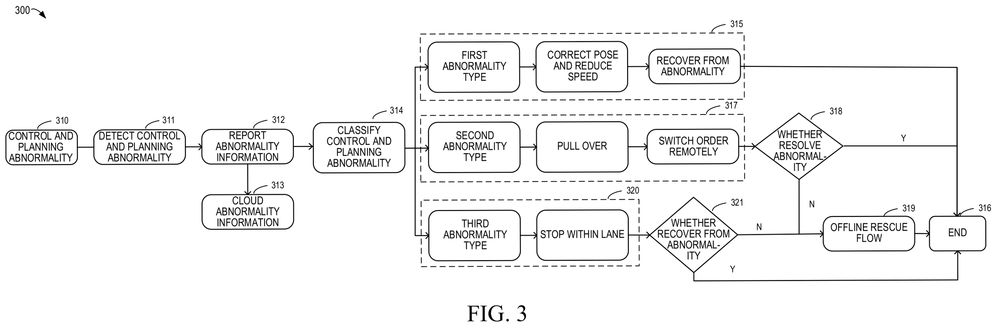

For ease of understanding, the process for processing the vehicle abnormality will be described below with reference to FIG. 3. As shown in FIG. 3, in the block 310, the planning system may experience a PNC abnormality before or during driving. In some embodiments, such a PNC abnormality may be, for example, classified into three types. The first abnormality type is a trajectory similar to "S" in the driving process of the autonomous vehicle, resulting in a safety risk of the autonomous vehicle. The second abnormality type is a planning failure of the planning system of the autonomous vehicle without a subsequent planned trajectory, thereby causing traffic jam. The third abnormality type is that the trajectory for the autonomous vehicle may be absent during driving, causing the vehicle unable to drive according to the planned trajectory, increasing the safety risk, and affecting the driving efficiency.

In some embodiments, the message received by the electronic device 120 associated with the planning system of the autonomous vehicle may be, for example, a message associated with the above mentioned PNC abnormality. In block 311, the electronic device 120 may detect a PNC abnormality, e.g., a first abnormality type, a second abnormality type, or a third abnormality type, among others.

In some embodiments, the electronic device 120 may further generate a fault code corresponding to the PNC abnormality type. As an example, the electronic device 120 may generate a fault code corresponding to the second abnormality type and the third abnormality type, for example, the second fault code and the third fault code.

Further, in block 312, the electronic device 120 may report the PNC abnormality type that generates the fault code to the monitoring system, and monitor the PNC abnormality type that generates the fault code by using the monitoring system. In some embodiments, such a monitoring system may be, for example, a system having a communication connection with the electronic device 120.

In block 313, the electronic device 120 may further report the PNC abnormality type generating the fault code to the server (or the cloud), such as a server having a communication connection with the electronic device 120. The server may display the abnormality information for the PNC abnormality type generating the fault code, making it is easy for the user to view.

Further, in block 314, the electronic device 120 may further classify the detected PNC abnormality. That is, the electronic device 120 may determine that the detected PNC abnormality is the first abnormality type, the second abnormality type, or the third abnormality type. The following describes the determination and the response of the three abnormality types.

Returning to FIG. 2, at block 220, in response to determining that lateral offset information between a planned trajectory and a traveling trajectory of the autonomous vehicle within a predetermined duration satisfies a predetermined condition, the electronic device 120 determines that the planning system of the autonomous vehicle is associated with a first abnormality type, wherein the lateral offset information indicates an offset direction of the traveling trajectory relative to the planned trajectory.

In other embodiments, such lateral offset information may also indicate an offset distance of the traveling trajectory relative to the planned trajectory.

To determine the positional relationship between the planned trajectory and the traveling trajectory of the autonomous vehicle within the predetermined duration, in some embodiments, the electronic device 120 may determine a first set of positions of the planned trajectory and a second set of positions of the traveling trajectory, and the first set of positions and the second set of positions may be associated with a predetermined duration. Further, the electronic device 120 may determine a set of lateral offset directions for the first set of positions relative to the second set of positions.

In some embodiments, for example, such a lateral offset direction may be a deviation between the planned trajectory and the traveling trajectory of the autonomous vehicle, which is caused by, for example, a sharp steering wheel of the autonomous vehicle, a problem with the control system of the autonomous vehicle, and the like.

In some embodiments, such a set of lateral offset directions may be represented by whether a planned trajectory of the autonomous vehicle within a predetermined duration is located on a left side or a right side of the traveling trajectory, or may be represented as a positive and negative sign change of a planned trajectory of the autonomous vehicle compared to the traveling trajectory within a predetermined duration. As an example, the planned trajectory of the autonomous vehicle presents an "S-shape" within a predetermined duration.

Further, in response to a degree of change of the set of lateral offset directions being greater than a preset degree, the electronic device 120 may determine that the lateral offset information satisfies the predetermined condition, wherein the degree of change indicates a number of times the direction of the lateral offset direction changes at adjacent moments.

In some embodiments, the adjacent moments in the predetermined duration may include, for example, a moment 1, a moment 2, a moment 3, and a moment 4. The electronic device 120 may determine that the planned trajectory of the autonomous vehicle is located on the left side of the traveling trajectory at the moment 1; the planned trajectory of the autonomous vehicle is located on the right side of the traveling trajectory at the moment 2; the planned trajectory of the autonomous vehicle is located on the left side of the traveling trajectory at the moment 3; and the planned trajectory of the autonomous vehicle is located again at the right side of the traveling trajectory at the moment 4. That is, the position of the planned trajectory of the autonomous vehicle relative to the driving trajectory continuously changes, and the number of times the direction changes in the predetermined duration is greater than the preset number of times. On this basis, the electronic device 120 may determine that the lateral offset information of the autonomous vehicle satisfies the predetermined condition.

It may be understood that the above is only an illustrative description in an ideal state, and the present disclosure is not intended to limit the number of times the direction changes.

In some other embodiments, the electronic device 120 may further determine that the lateral offset information satisfies the predetermined condition in response to determining that the positive and negative signs of the planned trajectory of the autonomous vehicle relative to the traveling trajectory repeatedly changes at adjacent moments within a predetermined duration.

In still other embodiments, the electronic device 120 may further determine that the lateral offset information satisfies the predetermined condition in response to determining that the severity of the set of lateral offsets is greater than a preset degree, wherein such a severity may be determined based on the acceleration or the offset distance.

In this way, the electronic device 120 can more efficiently determine that the planning system of the autonomous vehicle is associated with the first abnormality type, thereby improving the processing timeliness of the autonomous vehicle when dealing with the abnormality, thereby improving the user experience.

Returning to FIG. 2, at block 230, the electronic device 120 performs a first set of actions corresponding to the first abnormality type, wherein the first set of actions at least include reducing the traveling speed of the autonomous vehicle.

With continued reference to FIG. 3, in block 315, in response to determining that the planning system of the autonomous vehicle is associated with the first abnormality type, the electronic device 120 may perform a corresponding first set of actions, for example, reducing the traveling speed of the autonomous vehicle and correcting pose information of the autonomous vehicle. Therefore, the autonomous vehicle may return to normal. Further, in block 316, the electronic device 120 may determine that the PNC abnormality of the first abnormality type has been processed in response to the autonomous vehicle returning to normal.

The detection and response of the second abnormality type of autonomous vehicle will be described below.

In some embodiments, in response to failure of the autonomous vehicle to replan a global route based on initial routing information, the electronic device 120 may determine that the planning system of the autonomous vehicle is associated with a second abnormality type.

In some embodiments, the electronic device 120 may determine a target starting point of the initial routing to serve as initial routing information. Such initial routing information may further include other content, and it may be understood that the present disclosure is only described by taking the target starting point of the initial routing as an example.

In some embodiments, the electronic device 120 may initiate an initial routing based on the autonomous vehicle in response to the autonomous vehicle being located at a predetermined distance from the target starting point. In some embodiments, the electronic device 120 may empty the cache of the planning system of the autonomous vehicle and initiate rerouting based on the autonomous vehicle, in response to the failure of the autonomous vehicle to replan a global route based on initial routing information. Further, the electronic device 120 may determine that the planning system of the autonomous vehicle is associated with the second abnormality type in response to the autonomous vehicle repeating the above process multiple times at the predetermined distance.

With continued reference to FIG. 3, in block 317, in response to determining that the planning system of the autonomous vehicle is associated with the second abnormality type, the electronic device 120 may perform a second set of actions corresponding to the second abnormality type, wherein the second set of actions at least includes triggering the autonomous vehicle to pull over. In some embodiments, the electronic device 120 may send a target message corresponding to the second abnormality type to the remote device, in response to the autonomous vehicle completing the pullover. The target message may indicate a test order request associated with the autonomous vehicle. Further, the remote device may generate and send a corresponding test order to the autonomous vehicle to remotely switch the order for the autonomous vehicle.

In block 318, in response to the autonomous vehicle receiving the test order, the electronic device 120 may plan a global route based on the test order, thereby determining whether the abnormality is resolved. Further, in block 319, the electronic device 120 may generate a rescue request to request offline rescue in response to the failure of the autonomous vehicle to plan a global route based on the test order.

Further, in block 316, in response to determining whether the abnormality is resolved or the rescue request is generated, the electronic device 120 may determine that the processing of the PNC abnormality of the second abnormality type has been completed.

The detection and response of the third abnormality type of autonomous vehicle will be described below.

In some embodiments, in response to a control system of the autonomous vehicle failing to receive a planned trajectory, the electronic device 120 may determine that the planning system of the autonomous vehicle is associated with a third abnormality type. As an example, in the situation that a trajectory is planned successfully by the planning system but there may be an issue such as that of communication connection between the planning system and the control system, the control system of the autonomous vehicle fails to receiving the planned trajectory, thereby causing the traveling trajectory of the autonomous vehicle to be absent. As such, the electronic device 120 may determine that the planning system of the autonomous vehicle is associated with the third abnormality type.

With continued reference to FIG. 3, in block 320, in response to determining that the planning system of the autonomous vehicle is associated with the third abnormality type, the electronic device 120 may perform a third set of actions corresponding to the third abnormality type, wherein the third set of actions at least includes triggering the autonomous vehicle to stop within the current lane.

Further, in block 321, in response to the autonomous vehicle completing stopping within the current lane, the electronic device 120 may determine whether the planning system returns to normal within a predetermined duration (e.g., 5 seconds). As an example, the electronic device 120 may determine whether the planning system returns to normal within a predetermined duration, based on the autonomous vehicle repeatedly initiating a planning request within a predetermined duration. Further, in block 319, the electronic device 120 generates a rescue request to request offline rescue in response to the planning system failing to return to normal.

Further, in block 316, in response to determining the planning system returning to normal or the rescue request being generated within the predetermined duration, the electronic device 120 may determine that the processing of PNC abnormality of the third abnormality type has been completed.

The electronic device 120 may detect a point cloud around the autonomous vehicle during driving or PNC abnormalities. In this process, in response to detecting that there is a collision risk with a certain point cloud, the electronic device 120 may trigger the autonomous vehicle to stop immediately to ensure the safety of the autonomous vehicle.

In this way, the embodiments of the present disclosure can determine the abnormality type of the autonomous vehicle, and can execute the corresponding processing action based on the abnormality type, thereby improving the processing timeliness and the reliability of service for the autonomous vehicle when dealing with the abnormality.

### EXAMPLE APPARATUS AND DEVICE

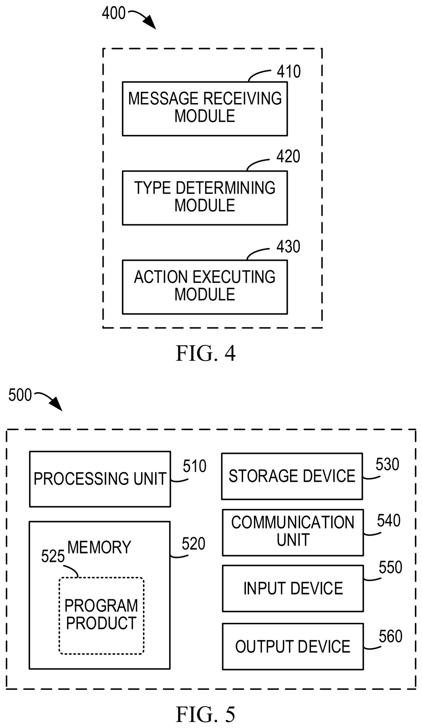

The embodiments of the present disclosure further provide a corresponding apparatus for implementing the above method or process. FIG. 4 shows a schematic structural block diagram of an apparatus 400 for processing vehicle abnormality according to some embodiments of the present disclosure. The apparatus 400 may be implemented or included in the electronic device 120. The various modules/components in the apparatus 400 may be implemented by hardware, software, firmware, or any combination thereof.

As shown in FIG. 4, the apparatus 400 includes: a message receiving module 410 configured to receive a message associated with a planning system of an autonomous vehicle, the message indicating an abnormality in the planning system; a type determining module 420 configured to, in response to determining that lateral offset information between a planned trajectory and a traveling trajectory of the autonomous vehicle within a predetermined duration satisfies a predetermined condition, determine that the planning system of the autonomous vehicle is associated with a first abnormality type, the lateral offset information indicating an offset direction of the traveling trajectory relative to the planned trajectory; and an action executing module 430 configured to perform a first set of actions corresponding to the first abnormality type, the first set of actions at least comprising reducing a traveling speed of the autonomous vehicle.

In some embodiments, the apparatus 400 further includes a first processing module configured to, in response to failure of the autonomous vehicle to replan a global route based on initial routing information, determine that the planning system of the autonomous vehicle is associated with a second abnormality type; and perform a second set of actions corresponding to the second abnormality type, wherein the second set of actions at least includes triggering the autonomous vehicle to pull over.

In some embodiments, the apparatus 400 further includes a second processing module configured to, send a target message corresponding to the second abnormality type to a remote device; receive, from the remote device, a test order associated with the autonomous vehicle; and generate a rescue request in response to failure of the autonomous vehicle to plan a global route based on the test order.

In some embodiments, the apparatus 400 further includes a third processing module configured to, in response to a control system of the autonomous vehicle failing to receive a planned trajectory, determine that the planning system of the autonomous vehicle is associated with a third abnormality type; and perform a third set of actions corresponding to the third abnormality type, wherein the third set of actions at least include triggering the autonomous vehicle to stop within a current lane.

In some embodiments, the apparatus 400 further includes a fourth processing module configured to, in response to the autonomous vehicle completing stopping within the current lane, determine whether the planning system returns to normal within a predetermined duration; and in response to the planning system failing to return to normal, generate a rescue request.

In some embodiments, the apparatus 400 further includes a fifth processing module configured to generate a fault code corresponding to the abnormality.

In some embodiments, the apparatus 400 further includes a sixth processing module configured to, determine a first set of positions of the planned trajectory and a second set of positions of the traveling trajectory, wherein the first set of positions and the second set of positions are associated with the predetermined duration; determine a set of lateral offset directions of the first set of positions relative to the second set of positions; and determine, based on the set of lateral offset directions, whether the lateral offset information satisfies the predetermined condition.

In some embodiments, the sixth processing module is further configured to, in response to a degree of change of the set of lateral offset directions being greater than a preset degree, determine that the lateral offset information satisfies the predetermined condition, wherein the degree of change indicates a number of times the direction of the lateral offset direction changes at adjacent moments.

In some embodiments, the first set of actions further comprises correcting pose information of the autonomous vehicle.

The modules included in the apparatus 400 may be implemented in various ways, including software, hardware, firmware, or any combination thereof. In some embodiments, one or more units may be implemented using software and/or firmware, such as machine-executable instructions stored on a storage medium. In addition to machine-executable instructions or as an alternative, some or all modules in the apparatus 400 may be implemented at least partially by one or more hardware logic components. As an example, rather than a limitation, example types of hardware logic components that may be used include field programmable gate array (FPGA), application specific integrated circuit (ASIC), application specific standard product (ASSP), system on chip (SOC), complex programmable logic device (CPLD), and so on.

Fig. 5 shows a block diagram of an electronic device 500 with which one or more embodiments of the present disclosure may be implemented. It should be understood that the electronic device 500 shown in Fig. 5 is only illustrative and should not constitute any limitation on the functions and scope of the embodiments described herein. The electronic device 500 shown in Fig. 5 may be used to implement the electronic device 120 of Fig. 1.

As shown in Fig. 5, the electronic device 500 is in the form of a general-purpose electronic device. The components of the electronic device 500 may include but are not limited to one or more processors or processing units 510, a memory 520, a storage device 530, one or more communication units 540, one or more input devices 550, and one or more output devices 560. The processing unit 510 may be an actual or virtual processor and may execute various processes based on the programs stored in the memory 520. In a multi-processor system, a plurality of processing units execute computer-executable instructions in parallel to improve the parallel processing capability of the electronic device 500.

The electronic device 500 typically includes multiple computer storage media. Such medium may be any available medium that is accessible to the electronic device 500, including but not limited to volatile and non-volatile medium, removable and non-removable medium. The memory 520 may be a volatile memory (for example, a register, a cache, a Random Access Memory (RAM)), a non-volatile memory (such as a Read-Only Memory (ROM), an Electrically Erasable Programmable Read-Only Memory (EEPROM), a flash memory), or any combination thereof. The storage device 530 may be any removable or non-removable medium, and may include a machine-readable medium such as a flash drive, a disk, or any other medium, which may be used to store information and/or data and may be accessed within the electronic device 500.

The electronic device 500 may further include additional removable/non-removable, volatile/non-volatile memory medium. Although not shown in Fig. 5, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 520 may include a computer program product 525 having one or more program modules configured to perform various methods or acts of the various embodiments of the present disclosure.

The communication unit 540 implements communication with other electronic devices through a communication medium. Additionally, the functions of the components of the electronic device 500 may be implemented by a single computing cluster or multiple computing machines, which may communicate through communication connections. Therefore, the electronic device 500 may use a logical connection with one or more other servers, a network personal computer (PC) or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may further communicate with one or more external devices (not shown) through the communication unit 540 as needed, the external devices such as a storage device, a display device, etc., communicate with one or more devices that enable the user to interact with the electronic device 500, or communicate with any devices (for example, a network card, a modem, etc.) that enable the electronic device 500 to communicate with one or more other electronic devices. Such communication may be performed via input/output (I/O) interfaces (not shown).

According to an example implementation of the present disclosure, there is provided a computer-readable storage medium having computer-executable instructions stored thereon, wherein the computer-executable instructions are executed by a processor to implement the method described above. According to an example implementation of the present disclosure, there is further provided a computer program product, the computer program product is tangibly stored on a non-transitory computer-readable medium and includes computer-executable instructions, and the computer-executable instructions are executed by a processor to implement the method described above.

Various aspects of the present disclosure are described herein with reference to flowcharts and/or block diagrams of methods, apparatuses, devices and computer program products implemented according to the present disclosure. It should be understood that each block of the flowchart and/or block diagrams, and combinations of blocks in the flowchart and/or block diagrams, may be implemented by computer-readable program instructions.

These computer-readable program instructions may be provided to a processor of a general-purpose computer, a special-purpose computer, or other programmable data processing apparatus to produce a machine, such that these instructions, when executed by the processor of the computer or other programmable data processing apparatus, produce an apparatus for implementing the functions/acts specified in one or more blocks of the flowchart and/or block diagrams. These computer-readable program instructions may also be stored in a computer-readable storage medium, these instructions cause the computer, the programmable data processing apparatus, and/or other devices to work in a specific manner, and thus, the computer-readable medium storing the instructions includes a manufactured product, which includes instructions for implementing various aspects of the functions/acts specified in one or more blocks of the flowchart and/or block diagrams.

The computer-readable program instructions may be loaded onto a computer, another programmable data processing apparatus, or other devices, such that a series of operations and steps are performed on the computer, the another programmable data processing apparatus, or the other devices to generate a computer-implemented process, so that the instructions executed on the computer, the another programmable data processing apparatus, or the other devices implement the functions/acts specified in one or more blocks of the flowchart and/or block diagrams.

**The** flowchart and block diagrams in the drawings show the possibly implemented architectures, functions and operations of the system, method and computer program product according to multiple implementations of the present disclosure. In this regard, each block in the flowchart or block diagrams may represent a module, program segment, or a part of instructions, and the module, program segment, or the part of instructions contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts, and combinations of the blocks in the block diagrams and/or flowcharts may be implemented by a special-purpose hardware-based system that perform specified functions or acts, or may be implemented by a combination of special-purpose hardware and computer instructions.

The implementations of the present disclosure have been described above, and the above description is illustrative, non-exhaustive, and not limited to the disclosed implementations. Many modifications and changes will be apparent to those of ordinary skill in the art without departing from the scope and spirit of the described implementations. The choice of terms used herein is intended to best explain the principles of each implementation, the practical application or improvement of the technology in the market, or to enable other ordinary skilled in the art to understand the various implementations disclosed herein.

## Claims

1. A method (200) for processing vehicle abnormality, comprising:
receiving (210) a message associated with a planning system of an autonomous vehicle, the message indicating an abnormality in the planning system;
in response to determining that lateral offset information between a planned trajectory and a traveling trajectory of the autonomous vehicle within a predetermined duration satisfies a predetermined condition, determining (220) that the planning system of the autonomous vehicle is associated with a first abnormality type, the lateral offset information indicating an offset direction of the traveling trajectory relative to the planned trajectory; and
performing (230) a first set of actions corresponding to the first abnormality type, the first set of actions at least comprising reducing a traveling speed of the autonomous vehicle.

2. The method (200) of claim 1, further comprising:
in response to failure of the autonomous vehicle to replan a global route based on initial routing information, determining that the planning system of the autonomous vehicle is associated with a second abnormality type; and
performing a second set of actions corresponding to the second abnormality type, the second set of actions at least comprising triggering the autonomous vehicle to pull over.

3. The method (200) of claim 2, further comprising:
sending a target message corresponding to the second abnormality type to a remote device;
receiving, from the remote device, a test order associated with the autonomous vehicle; and
generating a rescue request in response to failure of the autonomous vehicle to plan a global route based on the test order.

4. The method (200) of claim 1, further comprising:
in response to a control system of the autonomous vehicle failing to receive a planned trajectory, determining that the planning system of the autonomous vehicle is associated with a third abnormality type; and
performing a third set of actions corresponding to the third abnormality type, the third set of actions at least comprising triggering the autonomous vehicle to stop within a current lane.

5. The method (200) of claim 4, further comprising:
in response to the autonomous vehicle completing stopping within the current lane, determining whether the planning system returns to normal within a predetermined duration; and
in response to the planning system failing to return to normal, generating a rescue request.

6. The method (200) of claim 2 or claim 4, further comprising:
generating a fault code corresponding to the abnormality.

7. The method (200) of claim 1, further comprising:
determining a first set of positions of the planned trajectory and a second set of positions of the traveling trajectory, the first set of positions and the second set of positions being associated with the predetermined duration;
determining a set of lateral offset directions of the first set of positions relative to the second set of positions; and
determining, based on the set of lateral offset directions, whether the lateral offset information satisfies the predetermined condition.

8. The method (200) of claim 7, wherein determining, based on the set of lateral offset directions, whether the lateral offset information satisfies the predetermined condition comprises:
in response to a degree of change of the set of lateral offset directions being greater than a preset degree, determining that the lateral offset information satisfies the predetermined condition, the degree of change indicating a number of times the direction of the lateral offset direction changes at adjacent moments.

9. The method (200) of claim 1, wherein the first set of actions further comprises correcting pose information of the autonomous vehicle.

10. An apparatus (400) for processing vehicle abnormality, comprising:
a message receiving module (410) configured to receive a message associated with a planning system of an autonomous vehicle, the message indicating an abnormality in the planning system;
a type determining module (420) configured to, in response to determining that lateral offset information between a planned trajectory and a traveling trajectory of the autonomous vehicle within a predetermined duration satisfies a predetermined condition, determine that the planning system of the autonomous vehicle is associated with a first abnormality type, the lateral offset information indicating an offset direction of the traveling trajectory relative to the planned trajectory; and
an action executing module (430) configured to perform a first set of actions corresponding to the first abnormality type, the first set of actions at least comprising reducing a traveling speed of the autonomous vehicle.

11. An electronic device (500), comprising:
at least one processing unit (510); and
at least one memory (520) coupled to the at least one processing unit (510) and storing instructions for execution by the at least one processing unit (510), the instructions, when executed by the at least one processing unit (510), causing the electronic device (500) to perform the method of any of claims 1 to 9.

12. A computer-readable storage medium having stored thereon a computer program executable by a processor to implement the method of any of claims 1 to 9.

13. A computer program product comprising computer-executable instructions, wherein the computer-executable instructions, when executed by a processor, implement the method of any of claims 1 to 9.
